# EUROPÄISCHE PATENTSCHRIFT

(11) **EP 0 843 989 B1**
(45) Veröffentlichungstag und Bekanntmachung des Hinweises auf die Patenterteilung: **24.04.2002**
(21) Anmeldenummer: 97122161.9
(22) Anmeldetag: 26.07.1994
(51) Int. Cl.: A61C 8/00

(54) **Zahntotalersatzimplantat**
Complete tooth implant assembly
Système d'implant remplaçant totalement une dent

(30) Priorität: 09.11.1993 DE 4338198; 18.01.1994 DE 4401248
(43) Veröffentlichungstag der Anmeldung: 27.05.1998
(62) Teilanmeldung aus: 94111596.6
(73) Patentinhaber: ESKA Implants GmbH & Co., 23556 Lübeck (DE)
(72) Erfinder: Grundei, Hans Dr., 23558 Lübeck (DE); Sprang, Jürgen Dr., 22607 Hamburg (DE)
(74) Vertreter: Fuchs Mehler Weiss & Fritzsche

(56) Entgegenhaltungen:
- EP-A- 0 000 549
- DE-A- 4 127 839
- DE-U- 9 011 663
- US-A- 4 193 194

## Beschreibung

Die Erfindung betrifft ein Zahntotalersatzimplantat, welches aus drei Teilen besteht, nämlich dem Zahnwurzelimplantat, welches in der Alveole implantiert wird, einem Adapter zur lösbaren Verbindung einer Suprastruktur mit dem Zahnwurzelimplantat und schließlich der Suprastruktur selbst, die beispielsweise als Zahn ausgebildet sein kann.

Ein solches Zahntotalersatzimplantat ist beispielsweise bekannt geworden aus den Druckschriften DE-90 11 663 U1 sowie aus der DE-92 02 396 U1.

Das darin jeweils beschriebene Zahnwurzelimplantat wird - wie allgemein üblich - in eine in der Alveole nach Entfernung des natürlichen Zahnes eingebrachte Bohrung gesetzt, wo es auf verschiedene Weise fixiert werden kann. Ein Zwischenstück oder ein Adapter wird daraufhin implantatseitig in einen konischen Paßsitz mit dem Wurzelimplantat gebracht. Hierzu verfügt das Wurzelimplantat über eine konische Paßhülse und der Adapter über einen entsprechenden unteren Steckkonus.

Gemäß der letztgenannten Druckschrift besteht der Adapter aus einem Doppelkonus, von dem also vom implantatseitigen Konus ein suprastrukturseitiger Steckkonus abragt, welcher in einen Paßsitz mit einer konischen Paßhülse in der Suprastruktur bringbar ist.

Damit im Falle einer unter Umständen notwendig werdenden Revision der Suprastruktur diese unter Einsatz eines entsprechenden Hebelinstrumentes abgezogen werden kann, ohne daß der Suprastrukturadapter aus dem Zahnwurzelimplantat gezogen wird, sind die beiden Steckkonen des Adapters mit unterschiedlichen Konuswinkeln ausgestattet, so daß unterschiedlich definierte Abzugskräfte notwendig sind, um zunächst die Suprastruktur unter Einsatz einer deutlich geringeren Kraft vom Adapter abziehen zu können, bevor der Adapter aus dem Zahnwurzelimplantat abgezogen werden kann, um beispielsweise Entzündungsherde im Bereich des Zahnwurzelimplantates durch eine Spülung mit einem Medikament etc. behandeln zu können.

Dem Implantat gemäß der als gattungsbildend angesehenen DE-92 02 396 U1 haftet folgendes Problem an:

Der Adapter ist - wie ausgeführt - mit zwei unterschiedlichen Konuswinkeln ausgestattet, derart, daß die Suprastruktur auf dem Adapter in einem praktisch reinen Haftsitz sitzt, während der Adapter im Zahnwurzelimplantat mit praktisch reinem Paßsitz sitzt. Die Abzugskraft für die Suprastruktur ist - wie bereits ebenfalls schon ausgeführt - deutlich geringer als die Kraft zum Abziehen des Adapters aus dem Zahnwurzelimplantat. Die erstere kann - abhängig vom gewählten Konuswinkel - so gering sein, daß die Gefahr bestehen kann, daß sich die Suprastruktur aufgrund von Mikrobewegungen auf dem suprastrukturseitigen Steckkonus des Adapters lockert.

Abhilfe könnte hier theoretisch eine Sicherung mittels einer Haltefeder sein, die in geeigneter Weise in entsprechend dafür vorgesehene Nuten im Steckkonus greift. Dieses Arretierungsprinzip ist beispielsweise bekannt aus der DE-33 31 868 C2.

Derartige Haltefedern bestehen wegen der Stabilität üblicherweise aus Metall, ebenso wie die Steckkonen. Dies führt zu dem Problem, daß Mikrobewegungen unter Umständen zu einer Metallose führen aufgrund des Abriebs von Metallpartikeln.

Vor diesem Hintergrund ist es nun die Aufgabe der vorliegenden Erfindung, das gattungsgemäße Zahntotalersatzimplantat so weiterzubilden, daß die Suprastruktur sicher, aber lösbar auf dem Suprastrukturadapter sitzt, ohne daß Metalloseprobleme entstehen können.

Gelöst wird diese Aufgabe durch die Merkmale gemäß dem Anspruch 1.

Erfindungsgemäß ist anstelle des weiter oben näher beschriebenen Prinzips der Arretierung der Suprastruktur mittels einer Haltefeder vorgesehen, daß im Basisbereich des oberen Steckkonus des Adapters eine umlaufende Ringnut eingelassen ist, welche zusammen mit einer weiteren Ringnut in der konischen Hülse der Suprastruktur nach Herstellung der Verbindung zwischen beiden Implantatteilen einen umlaufenden Ringkanal bildet, welcher zur Injektion eines fließfähigen und aushärtbaren Materials mit einem die Suprastruktur nach außen durchlaufenden Kanal verbunden ist.

Also weist der suprastrukturseitige Steckkonus an seiner Basis, d. h. also kurz über dem Übergangsstück, eine eingelassene Ringnut auf, welche im wesentlichen die Hälfte des Ringkanals bildet, der nach Herstellung des Paßsitzes der Suprastruktur auf dem Suprastrukturadapter gebildet wird, wobei die andere Hälfte des Ringkanals aus einer in entsprechender Höhe in der konischen Hülse der Suprastruktur eingelassenen Ringnut gebildet ist. An einer Stelle wird die Suprastruktur durchsetzt von einem Kanal, der bis nach außen führt. Dieser Kanal bietet die Möglichkeit, nach dem Zusammenbau des Suprastrukturadapters und der Suprastruktur ein fließfähiges, aushärtbares Material in den Ringkanal einzuspritzen, wo das Material dann aushärtet. Insbesondere kann es sich bei diesem Material um Polymethylmetacrylat (PMMA) handeln, wie es zum Beispiel auch bei der Zementierung von künstlichen Hüftgelenken Anwendung findet. Dieses Material ist nach Aushärtung leicht durchtrennbar im Falle einer etwaig notwendig werdenden Revision der Suprastruktur. Auf der anderen Seite kann keine Metallose entstehen, da überhaupt kein Metall zur Arretierung der Suprastruktur auf dem Suprastrukturadapter verwendet wird.

Gemäß weiterer vorteilhafter Ausbildungen sind noch Verstellmöglichkeiten der Suprastruktur gegenüber dem Suprastrukturadapter und des Suprastrukturadapter gegenüber dem Zahnwurzelimplantat vorgesehen, wie sich aus weiteren Unteransprüchen ergibt. Im Hinblick auf die vorerwähnte Ringnut soll hier noch erwähnt werden, daß diese vorteilhaft - wenn die Verstellmöglichkeit der Suprastruktur gegenüber dem Suprastrukturadapter mit einem Außenvielkant des Suprastrukturadapters in einem Innenvielkant der Suprastruktur gegeben ist - unmittelbar überhalb des Außenvielkants ausgeformt ist.

Die Erfindung wird anhand eines Ausführungsbeispiels gemäß der Zeichnungsfiguren näher erläutert. Hierbei zeigt:
- Fig. 1: eine Schnittansicht des Zahnwurzelimplantates, wie es im Rahmen der Erfindung zum Einsatz kommt,
- Fig. 2: eine Aufsicht auf das Zahnwurzelimplantat gemäß Fig. 1,
- Fig. 3: eine Schnittansicht der Suprastruktur,
- Fig. 4: eine Ansicht in Richtung der Pfeile V in Fig. 3,
- Fig. 5: die Ansicht eines erfindungsgemäßen Zahntotalersatzimplantates, zusammengefügt aus den Teilen gemäß der Figuren 1, 3 und 4,
- Fig. 6a: eine Ansicht in Richtung der Linie A-A in Fig. 5,
- Fig. 6b: einen Schnitt entlang der Linie B-B in Fig. 5, und
- Fig. 6c: einen Schnitt entlang der Linie C-C in Fig. 5.

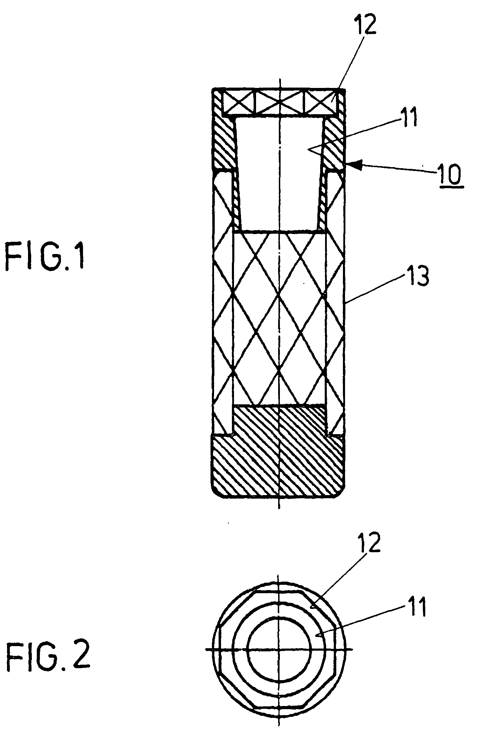

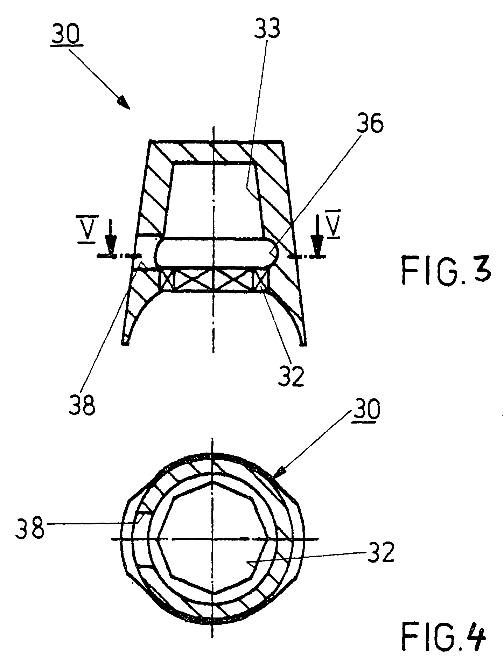

Fig. 1 zeigt eine mögliche Ausführungsform des Zahnwurzelimplantates 10, wie es im Rahmen des erfindungsgemäßen Zahntotalersatzimplantates zur Anwendung kommen kann. Das ausgebildete Wurzelimplantat 10 weist einen Netz-Hohlzylinder 13 auf, der in die Alveole eingesetzt wird. Die Ausbildung des Netz-Hohlzylinders ist nicht Gegenstand der vorliegenden Erfindung. Erfindungswesentlich hingegen ist die Ausbildung des Kopfes des Zahnwurzelimplantates 10, bei dem nämlich eine konische Paßhülse 11 eingearbeitet ist. Darüber hinaus ist in deren oberen Bereich ein Innenvielkant 12, hier ein Innenachtkant ausgebildet, der - wie weiter unten ausgeführt - zusammen mit einem weiteren Teil des Suprastrukturadapters 20 rotationsarretierend wirkt. Anschaulich wird die Konstruktion des Wurzelimplantates 10 insbesondere aus der Abbildung gemäß Fig. 2, welche eine Aufsicht auf den Kopf des Wurzelimplantates 10 zeigt. Deutlich erkennbar hierbei ist nochmals der Innenachtkant 12, welcher der Lageeinstellung und Arretierung der Suprastruktur 20 dient.

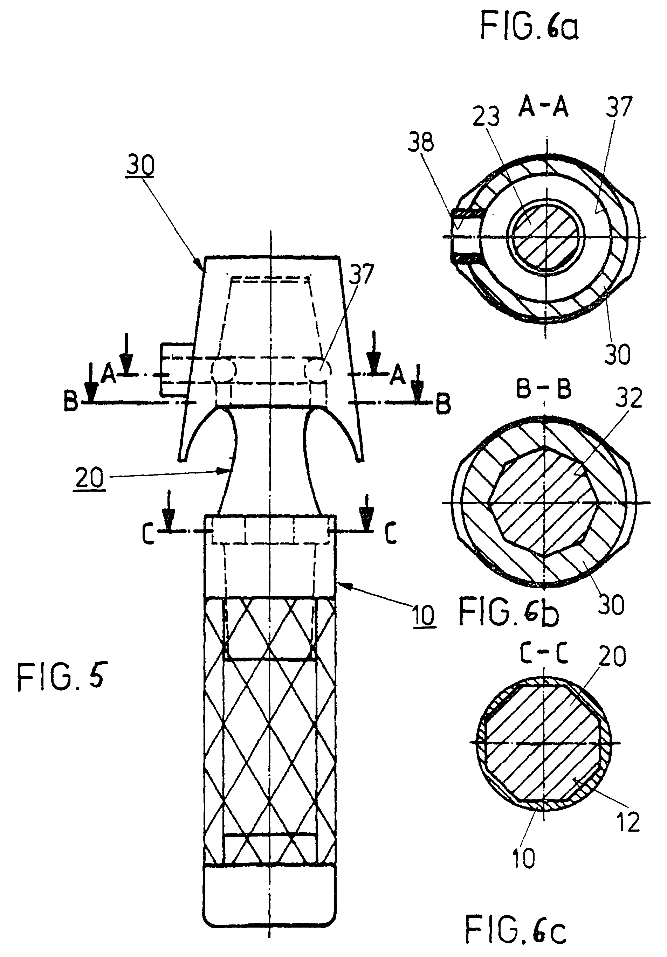

Fig. 3 zeigt eine Schnittansicht durch die Suprastruktur 30. Deutlich erkennbar ist die innere Paßhülse 33, welche zur Aufnahme des Steckkonus 23 eines Suprastrukturadapters 20 ausgebildet ist. Im unteren Bereich der konischen Paßhülse 33 ist vorliegend ein Innenachtkant 32 ausgebildet, der - wie ausgeführt - mit dem Außenachtkant 27 des Suprastrukturadapters 20 zusammenwirkt. Desweiteren ist erkennbar die weitere umlaufende Ringnut 36, die in die Paßhülse 33 eingelassen ist. Diese Ringnut 36 wirkt mit der Ringnut 29 des Suprastrukturadapters 20 so zusammen, daß sie nach dem Zusammenbau der Teile 20 und 30 einen Ringkanal 37 (Fig. 5) bilden.

Die Suprastruktur 30 ist durchsetzt von einem sie durchlaufenden Kanal 38, der seinerseits mit der Ringnut 36 in Verbindung steht. Dieser Sachverhalt wird auch nochmals deutlich aus der Fig. 4, welche ein Schnittansicht entlang der Linie V-V in Fig. 3 zeigt.

Fig. 5 zeigt nun die Ansicht des zusammengebauten erfindungsgemäßen Zahntotalersatzimplantates. Wesentlich hierbei ist die Ausbildung des Ringkanals 37 durch die beiden umlaufende Ringnuten 29 und 36. Im zusammengebauten Zustand würde nun durch den Kanal 38 ein fließfähiges und aushärtbares Material, beispielsweise PMMA (Polymethylmetacrylat) injiziert werden, welches nach Aushärtung einen Arretierungsring bildet. Der Kanal 38 wird sodann mit geeignetem Material verschlossen und der gegebenenfalls vorgesehene Ansatz (wie in Fig 5 dargestellt) würde entfernt werden.

Die Fig. 6a zeigt einen Schnitt der Linie A-A und verdeutlicht die Ausbildung des Ringkanals 37 sowie den Anschluß dieses Ringkanals an den Kanal 38.

Die Fig. 6b zeigt eine Schnittansicht entlang der Linie B-B und verdeutlicht das Zusammenwirken des Außenachtkants 27 des Suprastrukturadapters 20 mit dem Innenachtkant 32 der Suprastruktur 30.

Die Fig. 6c schließlich zeigt einen Schnitt entlang der Linie C-C und verdeutlicht in ähnlicher Weise das Zusammenwirken des Außenachtkants 22 des Suprastrukturadapters 20 mit dem Innenachtkant 12 des Zahnwurzelimplantates 10.

## Patentansprüche

1. Zahntotalersatzimplantat, bestehend aus einem Zahnwurzelimplantat (10), einem Suprastrukturadapter (20) und einer Suprastruktur (30), wobei die Suprastruktur (30) mit dem Zahnwurzelimplantat (10) lösbar verbindbar ist mittels des Adapters (20) und jeweils eine konische Hülse (11; 33) im Kopf des Zahnwurzelimplantates (10) sowie unten in der Suprastruktur (30) vorgesehen ist, bei dem der Adapter (20) im wesentlichen aus zwei voneinander wegragenden Steckkonen (21, 23) besteht, welche in einen lösbaren Sitz mit den konischen Hülsen (11, 13) bringbar sind, bei dem der Konuswinkel (α) des oberen Steckkonus (23) des Suprastrukturadapters (20) zu dessen Hauptachse (27) im Bereich von 7° < α < 10° und der Konuswinkel (β) seines unteren Steckkonus (21) zu dessen Hauptachse (28) im Bereich 1,5 < β < 4° liegt,
**dadurch gekennzeichnet, daß**
im Basisbereich des Steckkonus (23) eine umlaufende Ringnut (29) eingelassen ist, welche zusammen mit einer weiteren Ringnut (36) in der konischen Hülse (33) der Suprastruktur (30) nach Herstellung der lösbaren Verbindung einen umlaufenden Ringkanal (37) bildet, welcher zur Injektion eines fließfähigen und aushärtbaren Materials mit einem die Suprastruktur (30) nach außen durchlaufenden Kanal (38) verbunden ist.

2. Zahntotalersatzimplantat nach Anspruch 1, bei dem am oberen Bereich der konischen Paßhülse (11) im Zahnwurzelimplantat (10) ein Innenvielkant (12) ausgebildet ist, in welchen ein an der Basis des zweiten Steckkonus (21) des Adapters (20) zur Herstellung der Verbindung mit dem Zahnwurzelimplantat (10) angeformter Bund in Form eines Außenvielkantes (22) setzbar ist unter gleichzeitiger Herstellung der konischen Klemmverbindung zwischen Adapter (20) und Zahnwurzelimplantat (10).

3. Zahntotalersatzimplantat nach Anspruch 1 oder 2, **dadurch gekennzeichnet, daß** auch im unteren Bereich der konischen Paßhülse (33) ein Innenvielkant (32) ausgebildet ist, in welchen ein an der Basis des ersten Steckkonus (23) des Adapters (20) zur Herstellung der Verbindung mit der Suprastruktur (30) angeformter Bund in Form eines Außenvielkantes (27) setzbar ist unter gleichzeitiger Herstellung des lösbaren Sitzes zwischen Adapter (20) und Suprastruktur (30).

4. Zahntotalersatzimplantat nach Anspruch 2 oder 3, bei dem der Innenvielkant (12, 32) als Innenachtkant und der Außenvielkant (22, 27) als Außenachtkant ausgebildet ist.

5. Zahntotalersatzimplantat nach Anspruch 1 und 3, **dadurch gekennzeichnet, daß** die umlaufende Ringnut (39) unmittelbar überhalb des Außenvielkants (27) ausgeformt ist.

## Claims

1. Total tooth replacement implant consisting of a tooth root implant (10), a suprastructure adapter (20) and a suprastructure (30), wherein the suprastructure (30) can be releasably connected to the tooth root implant (10) by means of an adapter (20) and in each case a conical sleeve (11; 33) in the head of the tooth root implant (10) and is provided at the bottom of the suprastructure (30), in which the adapter (20) consists essentially of two plug cones (21, 23) projecting away from one another, which can be introduced into a releasable seat with the conical sleeves (11, 13), in which the cone angle (α) of the upper plug cone (23) of the suprastructure adapter (20) to its main axis (27) lies in the range from 7° <α< 10° and the cone angle (β) of its lower plug cone (21) to its main axis (28) lies in the range 1.5 <β<4°, **characterised in that** in the base region of the plug cone (23) a peripheral annular groove (29) is admitted, which together with a further annular groove (36) in the conical sleeve (33) of the suprastructure (30) after producing the releasable connection, forms a peripheral annular channel (37), which is connected to a channel (38) passing through the suprastructure (30) to the outside for injection of a flowable and curable material.

2. Total tooth replacement implant according to claim 1, in which an inner polygon (12), into which a flange in the form of an outer polygon (22) moulded on the base of the second plug cone (21) of the adapter (20) for producing the connection with the tooth root implant (10) can be placed with simultaneous production of the conical clamping joint between adapter (20) and tooth root implant (10), is formed on the upper region of the conical adjusting sleeve (11) in the tooth root implant (10).

3. Total tooth replacement implant according to claim 1 or 2, **characterised in that** an inner polygon (32), into which into which a flange in the form of an outer polygon (27) moulded on the base of the first plug cone (23) of the adapter (20) for producing the connection with the suprastructure (30) can be placed with simultaneous production of the releasable seat between adapter (20) and suprastructure (30), is also formed in the lower region of the conical adjusting sleeve (33).

4. Total tooth replacement implant according to claim 2 or 3, in which the inner polygon (12, 32) is designed as an inner octagon and the outer polygon (22, 27) is designed as an outer polygon.

5. Total tooth replacement implant according to claim 1 and 3, **characterised in that** the peripheral annular groove (39) is formed directly below the outer polygon (27).

## Revendications

1. Implant dentaire intégral, formé par une racine artificielle (10), un adaptateur de la superstructure (20) et une superstructure (30), dans lequel la superstructure (30) est assemblage de manière amovible avec la racine artificielle (10) au moyen de l'adaptateur (20) et un tube conique (11 ; 33) est prévu respectivement dans la tête de la racine artificielle (10), ainsi que dans la partie inférieure de la superstructure (30), dans lequel l'adaptateur (20) est constitué essentiellement par deux cônes d'emboîtement (21, 23) qui s'écartent l'un de l'autre et qui peuvent être amenés en assemblage amovible avec les tubes coniques (11, 13), sachant que l'angle de cône (a) du cône d'emboîtement supérieur (23)de l'adaptateur de la superstructure (20) forme avec l'axe principal de celui-ci un angle compris dans le domaine de 7° < a < 10° et l'angle de cône (b) de son cône d'emboîtement inférieur (21) forme avec l'axe principal de celui-ci un angle compris dans le domaine de 1,5° < b < 4°, **caractérisé en ce que** dans la zone de base du cône d'emboîtement (23) est réalisée une rainure circulaire périphérique (29) qui, après réalisation de l'assemblage amovible, forme avec une rainure circulaire (36) supplémentaire, réalisée dans le tube conique (33) de la superstructure (30), un canal circulaire (37), qui communique avec un canal (38) traversant la superstructure (30) vers l'extérieur afin d'y injecter une matière coulante et durcissante.

2. Implant dentaire intégral selon la revendication 1, dans lequel, dans la partie supérieure du tube de centrage conique (11), réalisé dans la racine artificielle (10), est formée une zone polyédrique intérieure (12), dans laquelle, tout en formant un assemblage par blocage conique entre l'adaptateur (20) et la racine artificielle (10), peut être insérée une collerette formée par une zone polyédrique extérieure (22) réalisée sur la base du deuxième cône d'emboîtement (21) de l'adaptateur (20) destiné à réaliser l'assemblage avec la racine artificielle (10).

3. Implant dentaire intégral selon la revendication 1 ou 2, **caractérisé en ce que** dans la partie inférieure du tube de centrage conique(33) est également réalisée une zone polyédrique intérieure (32), dans laquelle, tout en formant l'assemblage amovible entre l'adaptateur (20) et la superstructure (30), peut être insérée une collerette formée par une zone polyédrique extérieure (27) réalisée sur la base du premier cône d'emboîtement (23) de l'adaptateur (20) destiné à réaliser l'assemblage avec la superstructure (30).

4. Implant dentaire intégral selon la revendication 2 ou 3, dans lequel la zone polyédrique intérieure (12, 32) est conçue sous forme de zone octogonale intérieure et la zone polyédrique extérieure (22, 27) est conçue sous forme de zone octogonale extérieure.

5. Implant dentaire intégral selon les revendications 1 et 3, **caractérisé en ce que** la rainure circulaire périphérique (39) est réalisée directement au-dessus de la zone polyédrique extérieure (27).
